# EUROPÄISCHE PATENTSCHRIFT

(11) **EP 1 748 223 B1**
(45) Veröffentlichungstag und Bekanntmachung des Hinweises auf die Patenterteilung: **10.03.2010**
(21) Anmeldenummer: 06013782.5
(22) Anmeldetag: 04.07.2006
(51) Int. Cl.: F16H 7/08, F16H 7/18

(54) **Spannsystem**
Tensioning system
Systeme de tension

(30) Priorität: 21.07.2005 DE 102005035076
(43) Veröffentlichungstag der Anmeldung: 31.01.2007
(73) Patentinhaber: Weber Technology AG, 8700 Küsnacht (CH)
(72) Erfinder: Jenni, Hans-Rudolf, 3365 Grasswill (CH)
(74) Vertreter: Hössle Kudlek & Partner

(56) Entgegenhaltungen:
- DE-A1- 3 816 864
- DE-A1- 10 247 419
- DE-A1- 19 608 058

## Beschreibung

Die Erfindung betrifft ein Spannsystem für ein mit einem Motor zusammenwirkenden Antriebsglied und einen Motor, entsprechend dem Oberbegriff der Ansprüch 1 und 11.

Ein Spannsystem, das bspw. als Kettenspanner ausgebildet sein kann, übernimmt innerhalb eines mit einem Motor zusammenwirkenden Steuertriebs eine Reihe von Aufgaben. Mit dem Spannsystem wird eine Kette, die mit dem Motor zusammenwirkt, in unterschiedlichen Betriebsbedingungen unter einer definierten Last vorgespannt, dabei können während eines Betriebe der Steuerkette auftretende Verschleißlängungen der Steuerkette kompensiert werden. Des weiteren werden durch ein Dämpfungselement des Spannsystems Schwingungen der Steuerkette auf ein zulässiges Maß reduziert.

In einem herkömmlichen Motor drückt ein Spannelement eines Spannsystems unmittelbar auf eine Kettenspannschiene, die zur Beaufschlagung der Steuerkette vorgesehen ist. Des weiteren muss ein derartiges Spannelement innerhalb des Steuertriebs eine genau definiert Position aufweisen.

Die gattungsgemäße Druckschrift DE 102 47 419 A1 betrifft ein Umschlingungsgetriebe mit einem als Kette ausgebildeten Zugmittel, das mehrere Räder umschlingt. Dieses Umschlingungsgetriebe umfasst weiterhin einen Kettenspanner, einen Spannhebel und eine Führungsschiene. Dabei ist vorgesehen, dass der Kettenspanner den Spannhebel beaufschlagt, der wiederum zur Führung der Führungsschiene ausgebildet ist. Der Spannhebel ist um eine Achse drehbar. An einer Lagerstelle des Spannhebels ist eine Spannrolle drehbar angeordnet. Ein Zapfen des Spannhebels wirkt mit einer Kulisse der Führungsschiene zusammen. Die Führungsschiene ist um eine zusätzliche Achse drehbar gelagert.

Eine Spannvorrichtung für einen Kettentrieb ist aus der Druckschrift DE 38 16 864 A1 bekannt. Hierbei ist vorgesehen, dass eine Ölpumpenkette zwei Zahnräder umschlingt. Diese Spannvorrichtung umfasst einen Axialkolbendämpfer mit einem Stößel, der an einem Hebel angreift. Dieser Hebel ist exzentrisch zu einer Drehachse einer Schleifschiene angebracht und fest mit dieser verbunden. Durch eine Feder in dem Axialkolbendämpfer wird die Schleifschiene über den Hebel unter Vorspannung gehalten und gegen die Ölpumpenkette gedrückt.

Eine Kettenspannvorrichtung ist in der Druckschrift DE 196 08 058 A1 beschrieben. Hier umschlingt eine Kette Räder. Zum Spannen ist hier eine Spannvorrichtung vorgesehen, die über einen Kolben eine als Hebel bezeichnete Schiene beaufschlägt, die zwei Arme umfasst. Die Kette ist entlang eines ersten Arms linksseitig und entlang eines zweiten Arms rechtsseitig geführt. Die beiden Arme sind an einem Grundteil zusammengeführt.

Ausgehend hiervon wird ein Spannsystem mit den Merkmalen des Patentanspruchs 1 und ein Motor mit den Merkmalen des Patentanspruchs 11 vorgestellt.

Das erfindungsgemäße Spannsystem für ein mit einem Motor zusammenwirkendes Antriebsglied weist eine Spannschiene zum Beaufschlagen des Antriebsglieds, ein Spannelement und einen Hebel auf. Dabei ist der Hebel dazu ausgebildet, eine Kraft von dem Spannelement auf die Spannschiene zu übertragen.

Durch diese Ausbildung des Spannsystems ist es möglich, dass das Antriebsglied in jeder Betriebssituation ausreichend gespannt ist. Durch den Hebel ergibt sich außerdem, dass eine erweiterte räumliche Positionierung des Spannelements möglich ist. Das Spannsystem kann derart angeordnet werden, dass die Spannschiene das Antriebsglied sowohl an einem Leertrum als auch einem Zugtrum spannt.

Bei dem Spannsystem überträgt der Hebel die Kraft oder Spannkraft vorzugsweise derart von dem Spannelement auf die Spannschiene, dass zwischen einem Spannweg der Spannschiene und einer Kraft des Spannelements zumindest abschnittsweise ein weitgehend linearer Zusammenhang besteht. Hierbei handelt es sich bei dem Spannweg um die Strecke, um die die Spannschiene des Spannsystems das Antriebsglied aus einer Laufspur verschiebt. Eine derartige lineare Kennlinie zwischen dem Spannweg und der Spannkraft ist bevorzugt zumindest in für den Betrieb des Antriebsglieds innerhalb des Motors relevanten Intervallen für den Spannweg und die Spannkraft gegeben.

Durch das Spannsystem können während des Betriebs des Antriebsglieds auftretende Verschleißlängungen und Schwingungen des Antriebsglieds durch eine dämpfende Wirkung des Spannsystems reduziert werden.

In Ausgestaltung des vorliegenden Spannsystems ist vorgesehen, dass der Hebel relativ zu der Spannschiene drehbar ist. Dabei kann ein Drehpunkt des Hebels in der Spannschiene integriert sein. Außerdem kann die Spannschiene eine Aufnahmeeinrichtung zur Aufnahme des Hebels aufweisen. Die Aufnahmeeinrichtung kann derart ausgebildet sein, dass eine Drehbewegung und/oder eine ggf. minimale Relativbewegung des Hebels zu der Spannschiene möglich ist.

Der Drehpunkt und die Aufnahmeeinrichtung des Hebels können in der Spannschiene angeordnet sein. Da der Hebel zwischen dem Spannelement und der Spannschiene eine Wechselwirkung vermittelt, ist der Hebel, auch wenn dieser mit der Spannschiene verbunden und/oder zumindest bereichsweise in der Spannschiene integriert ist, gleichsam zwischen der Spannschiene und dem Spannelement angeordnet.

Die von dem Spannelement erzeugte Kraft wird demnach durch den Hebel übersetzt und ggf. verstärkt. Bei einem aus einer gegebenen Kraft resultierenden Spannweg oder Verstellweg der Spannschiene ist es somit möglich, das Antriebsglied mit einer verstärkten Kraft zu beaufschlagen. Mit dem Hebel innerhalb des Spannsystems wird das Antriebsglied durch eine konstante Kraft gespannt, zudem kann der Hebel als Verstärker für die von dem Spannelement erzeugte Kraft dienen.

Der Hebel des Spannsystems besteht typischerweise aus einem Körper und weist zwei Arme auf, wobei sich jeweils einer der beiden Arme ausgehend von dem Drehpunkt des Hebels erstreckt. Die beiden Arme können jeweils Hauptachsen aufweisen, wobei die Hauptachsen der beiden Arme unter einem geeigneten Winkel zueinander angeordnet sein können. In bevorzugter Ausführungsform sind die Achsen der beiden Arme parallel zu einander angeordnet und fluchten ineinander, so dass die beiden Arme an dem Drehpunkt voneinander getrennt sind.

Der erste der beiden Arme weist eine erste Länge oder Hebellänge auf und der zweite der beiden Arme weist eine zweite Länge oder Hebellänge auf. Je nach konkreter Anwendung des Hebels innerhalb des Spannsystems sowie in Abhängigkeit davon, entlang welcher Laufspur das Antriebsglied verläuft, können die beiden Arme gleiche oder unterschiedliche Längen aufweisen.

Des weiteren kann eine Übertragung der Spannkraft mittels des Hebels von dem Spannelement zu der Spannschiene durch eine Form des Hebels begünstigt sein. So kann der Hebel bspw. eine kurvenförmige oder abgerundete Fläche aufweisen, entlang der sich der Hebel während einer Drehung relativ zur Spannschiene bewegt bzw. abwälzt.

Es ist vorgesehen, dass das Spannelement dazu ausgebildet ist, mit dem ersten Arm des Hebels zusammenzuwirken. In bevorzugter Ausgestaltung ist das Spannelement dazu ausgebildet, den ersten Arm des Hebels zu belasten. Der zweite Arm des Hebels wirkt mit dem Motor und insbesondere einem Kurbelgehäuse des Motors zusammen. Dies kann bedeuten, dass der zweite Arm des Hebels an dem Motor und vorzugsweise an dem Kurbelgehäuse des Motors abgestützt ist. Bei entsprechender Form der Arme, insbesondere wenn diese durch kurvenförmige oder abgerundete Flächen begrenzt sind, können sich diese an dem Spannelement und dem Kurbelgehäuse abwälzen.

Der Hebel des Spannsystems kann zudem derart ausgebildet sein, dass die von dem Spannelement erzeugte Kraft nach dem Hebelgesetz durch Abstützung des Hebels an dem Kurbelgehäuse des Motors ausgeglichen wird. Die sich dabei ergebende Drehbewegung des Hebels wird auf die Spannschiene übertragen, so dass das Antriebsglied gleichförmig gespannt wird. Sollte das Antriebsglied während eines Betriebs besonderen Schwankungen ausgesetzt sein, werden dabei entsehende Kräfte wiederum durch das Spannsystem abgefangen.

Eine derartige Funktionsweise des Spannelements ist durch geeignete Wahl der Längen der beiden Arme einzustellen. Die Wahl dieser Längen, bspw. hinsichtlich einer Proportion der Längen der Arme zueinander, ist unter anderem in Abhängigkeit einer Ausgestaltung und/oder Anordnung des Spannelements sowie der Spannschiene zu wählen. Des weiteren ist zu berücksichtigen, wie die einzelnen Komponenten des Spannsystems, also die Spannschiene, der Drehpunkt des Hebels in der Spannschiene, das Spannelement sowie der Ort, an dem der Hebel an dem Motor und insbesondere dem Kurbelgehäuse des Motors abgestützt ist, räumlich zueinander angeordnet sind.

Mit dem Hebel kann somit eine lineare Kennlinie zwischen dem Spannweg der Spannschiene und der Spannkraft des Spannelements erreicht werden. Das Spannelement ist dazu ausgebildet, eine dämpfend wirkende Spannkraft bereitzustellen. Hierzu kann das Spannelement ein Dämpfungselement aufweisen, das das Spannelement entweder durch Reibungsdämpfung oder durch Viskosedämpfung dämpft. Das Spannelement ist je nach Ausbildung des Antriebsglieds bspw. als hydraulischer Ketten- oder Riemenspanner ausgebildet.

Das Spannsystem ist für einen Steuertrieb vorgesehen. Dieser Steuertrieb umfasst das Antriebsglied das eine Anzahl Räder des Motors umschlingt. Diese Räder sind an Wellen des Motors befestigt. Das Antriebsglied ist vorzugsweise als ein in sich geschlossenes Endlosglied ausgebildet und überträgt zwischen den Rädern des Motors Drehbewegungen. In Ausgestaltung ist das Spannsystem zum Spannen eines als Kette ausgebildeten Antriebsglieds vorgesehen. Es ist jedoch auch möglich, mit dem Spannsystem ein als Riemen ausgebildetes Antriebsglied zu spannen.

Der erfindungsgemäße Motor weist eine Anzahl Wellen, ein Antriebsglied, das mit mindesten zwei der Wellen zusammenwirkt und mindestens ein erfindungsgemäßes Spannsystem, wie voranstehend beschrieben, auf.

Da der erfindungsgemäße Motor das erfindungsgemäße Spannsystem aufweist, können Drehbewegungen zwischen einzelnen Wellen des Motors über das Antriebsglied effektiv übertragen werden. Das Antriebsglied dieses Motors ist in sämtlichen Betriebszuständen des Motors optimal gespannt, so dass der Motor einen größtmöglichen Wirkungsgrad hat.

Es ist üblicherweise vorgesehen, dass die mindestens zwei Wellen jeweils ein Rad aufweisen, und dass das Antriebsglied die Räder der mindestens zwei Wellen umschlingt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

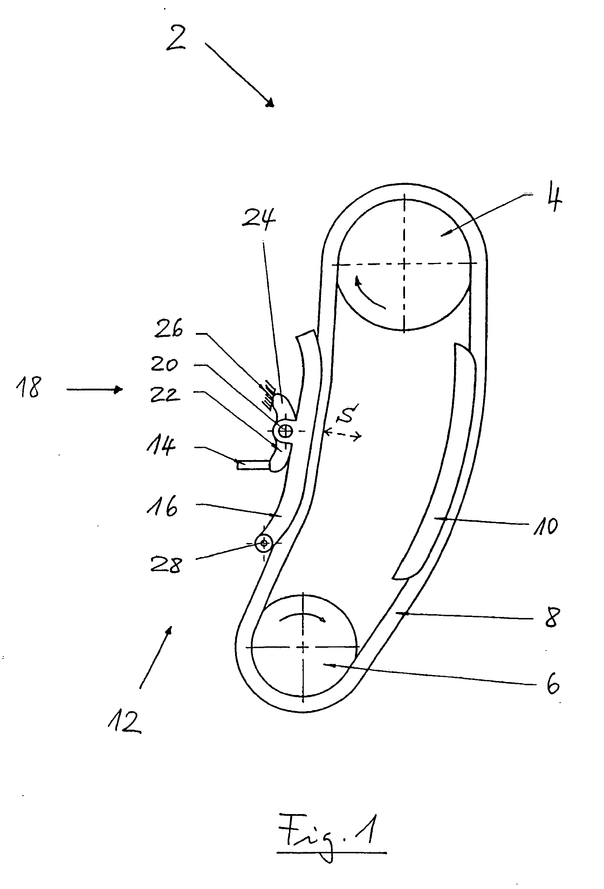

- Figur 1: zeigt eine bevorzugte Ausführungsform eines Steuertriebs mit einem Spannsystem in schematischer Darstellung.

Der in Figur 1 gezeigte Steuertrieb 2 umfasst ein erstes Rad 4 und ein zweites Rad 6. Diese beiden Räder 4, 6 sind an Enden von Wellen eines hier nicht dargestellten Motors befestigt. Die beiden Räder 4, 6 sind von einem endlosen Antriebsglied 8, das hier als geschlossene Kette ausgebildet ist, umschlungen.

Des weiteren ist bei dieser Ausführungsform vorgesehen, dass das erste Rad 4 von der entsprechenden Welle des Motors angetrieben wird und dabei eine Drehbewegung im Uhrzeigersinn ausführt. Das Antriebsglied 8 wird durch das erste Rad 4 in Bewegung gesetzt und überträgt diese Drehbewegung auf das zweite Rad 6, so dass dieses zweite Rad 6 ebenfalls eine Drehbewegung im Uhrzeigersinn ausführt. Die Richtungen der Drehbewegungen sind durch die gebogenen Pfeile verdeutlicht.

Der vorliegende Steuertrieb 2 weist eine Führungsschiene 10 auf, entlang der das Antriebsglied 8 bei Betrieb des Motors gleitet. Außerdem weist der Steuertrieb 2 ein aus mehreren Komponenten bestehendes Spannsystem 12 auf, das dazu ausgebildet ist, das Antriebsglied 8 in jeder Betriebssituation des Motors derart zu spannen, dass Drehbewegungen zwischen den Rädern 4, 6 effektiv übertragen werden.

Dieses Spannsystem 12 umfasst ein hydraulisch betriebenes Spannelement 14, eine Spannschiene 16 sowie einen Hebel 18. Ein Drehpunkt 20 des Hebels 18 ist in einer Aufnahmeeinrichtung der Spannschiene 16 aufgenommen, so dass sich der Hebel 18 um den Drehpunkt 20 relativ zu der Spannschiene 16 drehen kann.

Der Hebel 18 weist einen ersten Arm 22 und einen zweiten Arm 24 auf. Diese beiden Arme 22, 24 erstrecken sich ausgehend von dem Drehpunkt 20 des Hebels 18. Der Hebel 8 weist im vorliegenden Ausführungsbeispiel ein bananenförmiges Profil auf, das zu einer durch den Drehpunkt senkrecht zu den beiden Armen 22, 24 verlaufenden Linie achssymmetrisch ausgebildet ist.

Falls der Hebel 18 zusätzlich zu der Drehung eine begrenzte Relativbewegung zu der Spannschiene 16 ausführen kann, kann sich ein der Spannschiene 16 zugewandter Abschnitt des Profils des Hebels 18 an einer Rückseite der Spannschiene 16 wälzen.

Der zweite Arm 24 des Hebels 18 wirkt mit einem hier nur abschnittweise dargestellten Kurbelgehäuse 26 des Motors zusammen. Dabei ist ein Ende dieses zweiten Hebels 24 an dem Kurbelgehäuse 26 angelenkt, so dass der Hebel 18 an dem Kurbelgehäuse 26 über den zweiten Arm 24 abgestützt ist. Der erste Arm 22 des Hebels 18 wirkt mit dem Spannelement 14 zusammen. Hierzu ist ein Ende des ersten Arms 22 des Hebels 18 an dem Spannelement 14 angelenkt oder mit diesem Spannelement 14 gelenkig verbunden, so dass das Spannelement 14 den Hebel 18 über den ersten Arm 22 belastet, wodurch eine Änderung einer Position des Endes dieses ersten Arms 22 herbeigeführt wird.

Der insgesamt zweiarmige oder zweiseitige Hebel 18 gleicht ein erstes Drehmoment, das sich aus einem Produkt einer Länge des ersten Arms 22 und der auf den ersten Arm 22 wirkenden von dem Spannelement 14 erzeugten Kraft ergibt, und ein zweites Drehmoment, das sich aus einem Produkt einer Länge des zweiten Arms 24 und einer auf den zweiten Arm 24 durch Abstützen auf dem Kurbelgehäuse 26 ergebenden Kraft ergibt, aus.

Bei Betrieb des Motors wird von dem Spannelement 14 eine bspw. temperaturabhängige Kraft oder Spannkraft erzeugt. Dadurch wird das Ende des ersten Arms 22 des Hebels 18 aufgrund einer durch diese Kraft erzeugten Belastung hin und her bewegt. Da das Ende des zweiten Arms 24 des Hebels 18 an dem Kurbelgehäuse 26 abgestützt ist, wird somit insgesamt eine Bewegung des Hebels 18 erzeugt, wobei sich der Hebel 18 um den Drehpunkt 20 relativ zu der Spannschiene 16 dreht.

Die Spannschiene 16 ist in einem Ende in einem Drehaufnahmepunkt 28 drehbar gelagert aufgenommen und ist im Profil weitgehend U-förmig ausgebildet, so dass das Antriebsglied 8 zumindest teilweise innerhalb der Spannschiene 16 aufgenommen ist und entlang einer in Figur 1 verdeckten Gleitfläche der Spannschiene 16 gleitet.

Mit dem Hebel 18 wird die von dem Spannelement 14 erzeugte Kraft bzw. Spannkraft derart auf die Spannschiene 16 übertragen, dass diese eine Relativbewegung um einen Spannweg S, der hier durch den gestrichelten Doppelpfeil dargestellt ist, bewegt wird. Hierdurch wird eine Laufspur des Antriebsglieds 8 entlang der Spannschiene 16 örtlich variiert und das Antriebsglied 8 somit in jeder Betriebssituation des Motors gespannt. Aufgrund der dargestellten Ausgestaltung des Hebels 18 besteht zwischen der Spannkraft des Spannelements 14 und dem Spannweg S der Spannschiene 16 bei Übertragung der Spannkraft durch den Hebel 18 ein linearer Zusammenhang. Durch den als Zwischenelement zwischen dem Spannelement 14 und der Spannschiene 16 wirkenden Hebel 18 wird auf das Antriebsglied 8 in allen Betriebssituationen eine konstante Kraft oder Spannkraft übertragen.

Im vorliegenden Ausführungsbeispiel ist das erste Rad 4 mit einer Nockenwelle des Motors und das zweite Rad 6 mit einer Kurbelwelle des Motors verbunden. In Folge schwellender Drehmomente der Nockenwelle, einer Drehungleichförmigkeit der Kurbelwelle und durch einen Polygoneffekt werden schwellende Längskräfte, die auf das Antriebsglied 8 wirken, erzeugt. Hierdurch entsteht eine dynamische Belastung des Antriebsglieds 8, die jedoch durch das vorliegende Spannsystem 12 effektiv aufgefangen werden kann.

## Patentansprüche

1. Spannsystem für ein mit einem Motor zusammenwirkendes Antriebsglied (8), das eine Spannschiene (16) zum Beaufschlagen des Antriebsglieds (8), ein Spannelement (14) und einen Hebel (18) aufweist, wobei der Hebel (18) dazu ausgebildet ist, eine Kraft von dem Spannelement (14) auf die Spannschiene (16) zu übertragen, wobei der Hebel (18) zwei Armen (22, 24) aufweist,
**dadurch gekennzeichnet, dass**
ein Drehpunkt (20) des Hebels (18) in der Spannschiene (16) integriert ist, und wobei die beiden Arme (22, 24) an dem Drehpunkt (20) voneinander getrennt sind.

2. Spannsystem nach Anspruch 1, bei dem der Hebel (18) die Kraft derart überträgt, dass zwischen einem Spannweg der Spannschiene (16) und der Kraft des Spannelements (14) ein linearer Zusammenhang besteht.

3. Spannsystem nach Anspruch 1 oder 2, bei dem der Hebel (18) relativ zu der Spannschiene (16) drehbar ist.

4. Spannsystem nach Anspruch 1, 2 oder 3, bei dem die Spannschiene (16) eine Aufnahmeeinrichtung zur Aufnahme des Drehpunkts (20) des Hebels (18) aufweist.

5. Spannsystem nach einem der voranstehenden Ansprüche, bei dem das Spannelement (14) dazu ausgebildet ist, mit einem ersten Arm (22) des Hebels (18) zusammenzuwirken.

6. Spannsystem nach Anspruch 5, bei dem das Spannelement (14) dazu ausgebildet ist, den ersten Arm (22) des Hebels (18) zu belasten.

7. Spannsystem nach einem der voranstehenden Ansprüche, bei dem ein zweiter Arm (24) des Hebels (18) mit einem Kurbelgehäuse (26) des Motors zusammenwirkt.

8. Spannsystem nach Anspruch 7, bei dem der zweite Arm des Hebels (18) an dem Kurbelgehäuse (26) des Motors abgestützt ist.

9. Spannsystem nach einem der voranstehenden Ansprüche, für einen Steuertrieb (2), bei dem das Antriebsglied (8) eine Anzahl Räder (4, 6) des Motors umschlingt.

10. Spannsystem nach einem der voranstehenden Ansprüche, das zum Spannen eines als Kette ausgebildeten Antriebsglieds (8) vorgesehen ist.

11. Motor, der eine Anzahl Wellen, ein Antriebsglied (8), das mit mindestens zwei der Wellen zusammenwirkt, und mindestens ein Spannsystem (12) nach einem der Ansprüche 1 bis 10 aufweist.

12. Motor nach Anspruch 11, bei dem jeweils eine der mindestens zwei Wellen ein Rad (4, 6) aufweist und das Antriebsglied (8) die Räder (4, 6) der mindestens zwei Wellen umschlingt.

## Claims

1. Tensioning system for a drive member (8) cooperating with a motor comprising a tensioning rail (16) for acting upon the drive member (8), a tensioning element (14) and a lever (18), wherein the lever (18) is adapted to transfer a force from the tensioning element (14) to the tensioning rail (16), the lever (18) having two arms (22, 24),
**characterized in that**
a fulcrum (20) of the lever (18) is integrated in the tensioning rail (16), wherein both arms (22, 24) are separated from each other at the fulcrum (20).

2. Tensioning system according to claim 1, wherein the lever (18) transfers the force so that there is a linear relationship between a tensioning distance of the tensioning rail (16) and the force of the tensioning element (14).

3. Tensioning system according to claim 1 or 2, wherein the lever (18) is rotatable relative to the tensioning rail (16).

4. Tensioning system according to claim 1, 2 or 3, wherein the tensioning rail (16) includes a receiving means for receiving the fulcrum (20) of the lever (18).

5. Tensioning system according to one of the preceding claims, wherein the tensioning element (14) is adapted to cooperate with a first arm (22) of the lever (18).

6. Tensioning system according to claim 5, wherein the tensioning element (14) is adapted to exert a load on the first arm (22) of the lever (18).

7. Tensioning system according to one of the preceding claims, wherein a second arm (24) of the lever (18) cooperates with a crankcase (26) of the motor.

8. Tensioning system according to claim 7, wherein the second arm of the lever (18) is supported at the crankcase (26) of the motor.

9. Tensioning system according to one of the preceding claims for a primary drive (2), wherein the drive member (8) embraces a number of wheels (4, 6) of the motor.

10. Tensioning system according to one of the preceding claims designed for tensioning a drive member (8) embodied as a chain.

11. Motor comprising a number of shafts, a drive member (8) cooperating with at least two of said shafts, and at least one tensioning system (12) according to one of claims 1 to 10.

12. Motor according to claim 11, wherein one of the at least two shafts has a wheel (4, 6), respectively, and the drive member (8) embraces the wheels (4, 6) of the at least two shafts.

## Revendications

1. Système de tensionnement pour un organe d'entraînement (8) coopérant avec un moteur, qui comprend une tringle de tensionnement (16) pour solliciter l'organe d'entraînement (8), un élément de tensionnement (14) et un levier (18), ledit levier (18) étant réalisé pour transmettre une force depuis l'élément de tensionnement (14) vers la tringle de tensionnement (16), et le levier (18) comportant deux bras (22, 24),
**caractérisé en ce qu'**un point de rotation (20) du levier (18) est intégré dans la tringle de tensionnement (16), et **en ce que** les deux bras (22, 24) sont séparés l'un de l'autre au niveau du point de rotation (20).

2. Système de tensionnement selon la revendication 1, dans lequel le levier (18) transmet la force de telle manière qu'il existe une relation linéaire entre un trajet de tensionnement de la tringle de tensionnement (16) et la force de l'élément de tensionnement (14).

3. Système de tensionnement selon la revendication 1 ou 2, dans lequel le levier (18) est rotatif par rapport à la tringle de tensionnement (16).

4. Système de tensionnement selon la revendication 1, 2 ou 3, dans lequel la tringle de tensionnement (16) comprend un dispositif récepteur pour la réception du point de rotation (20) du levier (18).

5. Système de tensionnement selon l'une des revendications précédentes, dans lequel l'élément de tensionnement (14) est réalisé afin de coopérer avec un premier bras (22) du levier (18).

6. Système de tensionnement selon la revendication 5, dans lequel l'élément de tensionnement (14) est réalisé afin de charger le premier bras (22) du levier (18).

7. Système de tensionnement selon l'une des revendications précédentes, dans lequel un second bras (24) du levier (18) coopère avec un carter de bielle (26) du moteur.

8. Système de tensionnement selon la revendication 7, dans lequel le second bras du levier (18) est soutenu sur le carter de bielle (26) du moteur.

9. Système de tensionnement selon l'une des revendications précédentes, pour un mécanisme de commande (2) dans lequel l'organe d'entraînement (8) entoure un certain nombre de roues (4, 6) du moteur.

10. Système de tensionnement selon l'une des revendications précédentes, qui est prévu pour tensionner un organe d'entraînement (8) réalisé sous forme de chaîne.

11. Moteur, qui comprend un certain nombre d'arbres, un organe entraînement (8) qui coopère avec au moins deux des arbres, et au moins un système de tensionnement (12) selon l'une des revendications 1 à 10.

12. Moteur selon la revendication 11, dans lequel chacun desdits au moins deux arbres comprend une roue (4, 6), et l'organe entraînement (8) entoure les roues (4, 6) desdits au moins deux arbres.
